# EUROPEAN PATENT APPLICATION

(11) **EP 4 610 869 A1**
(43) Date of publication of application: **03.09.2025**
(21) Application number: 23881519.5
(22) Date of filing: 18.09.2023
(51) Int. Cl.: G06F 21/79, G06F 21/60, G06F 21/44, G06M 1/272

(54) **SOLID-STATE DRIVE AND LIMITED ACCESS CONTROL METHOD THEREFOR, AND ELECTRONIC DEVICE**

(30) Priority: 27.10.2022 CN 202211322676
(71) Applicant: Institute Of Microelectronics, Chinese Academy Of Sciences, Beijing 100029 (CN)
(72) Inventor: XIE, Yuanlu, Beijing 100029 (CN); XI, Kai, Beijing 100029 (CN); JI, Lanlong, Beijing 100029 (CN); XU, Xiaoxin, Beijing 100029 (CN); HU, Hongyang, Beijing 100029 (CN); LU, Nianduan, Beijing 100029 (CN); DONG, Danian, Beijing 100029 (CN)
(74) Representative: Metida
(86) International application number: PCT/CN2023/119454
(87) International publication number: WO 2024/087939

(57) **Abstract**

Disclosed are a solid-state drive and a limited access control method therefor, and an electronic device. The solid-state drive comprises: a master chip, a flash memory array and a limited access circuit. The master chip comprises: a host interface controller, a central processing unit and a flash memory controller. The limited access circuit comprises: a limit counter, a first logic gate circuit and a state machine. Initialization data of all storage units of the limit counter are "1", and the first logic gate circuit performs an OR operation on multi-bit counting data separately read from storage units of the limit counter and transmits an OR operation result to the state machine; the state machine writes a "0" value into the limit counter every time the state machine detects that a host accesses the flash memory array, and prohibits the host from accessing the flash memory array when it is detected that the OR operation result is "0". In this way, an upper limit can be set for the number of times the flash memory array can be accessed in the solid-state drive, thereby effectively improving the security of data in the solid-state drive.

## Description

### TECHNICAL FIELD

The present application relates to the technical field of memories, and in particular, to a solid-state drive (SSD) and a limited access control method therefor, and an electronic device.

### BACKGROUND

An SSD is an alternative to a traditional mechanical hard drive. An internal circuit of a typical SSD (solid-state disk or solid-state drive) includes a master chip, a double data rate (DDR) memory chip, a NAND flash chip (which can also be referred to as a "flash memory" for short), a serial peripheral interface (SPI) flash chip, and the like. Important indicators of an SSD include a data capacity, a data storage lifespan, and the like. The SSD is a data storage medium, and security control for access to the SSD is very important in some special scenarios.

### SUMMARY

The embodiments of the present disclosure provide an SSD and a limited access control method therefor, and an electronic device, which can effectively improve data security of the SSD.

According to a first aspect, the embodiments of the present disclosure provide an SSD, including a master chip, a flash memory array, and a limited access circuit.

The master chip includes a host interface controller, a central processing unit (CPU), and a flash memory controller. The host interface controller, the CPU, and the flash memory controller are connected through a bus. The flash memory controller is connected to the flash memory array.

The limited access circuit includes a limit counter, a first logic gate circuit, and a state machine.

The limit counter includes a plurality of storage units. Initialization data of each of the plurality of storage units is "1". Each data readout terminal of the limit counter is connected to an input terminal of the first logic gate circuit. A data operation terminal of the limit counter and an output terminal of the first logic gate circuit are connected to the state machine.

The first logic gate circuit is configured to perform an OR operation on multi-bit counting data read from the plurality of storage units, and transmit an OR operation result to the state machine.

The state machine is configured to write a value of "0" into the limit counter every time the state machine monitors that a host accesses the flash memory array, and prohibit the host from accessing the flash memory array when detecting that the OR operation result is "0".

Further, the limited access circuit further includes a second logic gate circuit and a key memory configured to store an externally written key.

The second logic gate circuit has a first input terminal connected to a data readout terminal of the key memory and a second input terminal connected to a supply terminal of a preset security key.

A data operation terminal of the key memory and an output terminal of the second logic gate circuit are connected to the state machine.

The second logic gate circuit is configured to perform an exclusive OR operation on the externally written key and the preset security key, and transmit an exclusive OR operation result to the state machine.

The state machine is further configured to: when detecting that the exclusive OR operation result is "1", prohibit the host from accessing the flash memory array and allow the limit counter and the key memory to be erased and programmed; and when detecting that the exclusive OR operation result is "0" and the OR operation result is "1", allow the host to access the flash memory array and the limit counter to be programmed, and prohibit the limit counter from being erased and the key memory from being erased and programmed.

Further, a number of first input terminals and a number of second input terminals of the second logic gate circuit are the same as a data bit width of the key memory. Each of the second input terminals is connected to a high-level voltage terminal or a low-level voltage terminal based on the preset security key.

Further, the state machine is connected to the bus.

Further, the state machine is connected to the flash memory controller.

Further, the state machine is connected to the host interface controller.

According to a second aspect, the embodiments of the present disclosure provide an electronic device, including a host and the SSD according to the first aspect. The host is connected to the host interface controller of the SSD to access the SSD.

According to a third aspect, the embodiments of the present disclosure provide a limited access control method for an SSD. The SSD includes a master chip, a flash memory array, and a limited access circuit. The limited access circuit includes a limit counter, a first logic gate circuit, and a state machine. The limit counter includes a plurality of storage units. Initialization data of each of the plurality of storage units is "1". A data readout terminal of the limit counter is connected to an input terminal of the first logic gate circuit. A data operation terminal of the limit counter and an output terminal of the first logic gate circuit are connected to the state machine. The method includes:
monitoring access of a host to the flash memory array in user mode;
writing a value of "0" into the limit counter every time it is monitored that the host accesses the flash memory array; and
if detecting that an OR operation result output by the first logic gate circuit is "0", prohibiting the host from accessing the flash memory array.

Further, before entering the user mode, the method further includes: initializing configurations, which specifically includes:
performing data erasing on the limit counter such that data stored in each of the plurality of storage units is initialized to "1".

Further, the limited access circuit further includes a second logic gate circuit and a key memory configured to store an externally written key. The second logic gate circuit has a first input terminal connected to a data readout terminal of the key memory and a second input terminal connected to a supply terminal of a preset security key. A data operation terminal of the key memory and an output terminal of the second logic gate circuit are connected to the state machine. Before entering the user mode, the method further includes: initializing configurations, which specifically includes:
after the SSD is powered on, monitoring an exclusive OR operation result output by the second logic gate circuit;
if the exclusive OR operation result is "1", allowing the limit counter and the key memory to be erased and programmed, performing data erasing on the limit counter and the key memory such that data stored in the limit counter and the key memory is initialized to "1", and writing external input key data into the key memory in response to a key writing command sent by the host; and
if the exclusive OR operation result is "0", opening an access channel of the host to the flash memory array, entering the user mode, prohibiting the limit counter from being erased and the key memory from being erased and programmed, and starting to monitor the OR operation result output by the first logic gate circuit.

**In** the SSD provided by the embodiments of the present disclosure, the limited access circuit is added. The limited access circuit includes the limit counter, the first logic gate circuit, and the state machine. The initialization data of each of the storage units in the limit counter is "1". The first logic gate circuit performs the OR operation on the multi-bit counting data read from the storage units in the limit counter, and transmits the OR operation result to the state machine. The state machine writes a value of "0" into the limit counter every time the state machine detects that the host accesses the flash memory array, and determines that a maximum number of access times is reached and prohibits the host from accessing the flash memory array again when detecting that the OR operation result is "0". In this way, an upper limit (namely, a data bit width of the limit counter) can be set for a number of times the flash memory array in the SSD can be accessed. When a number of access times reaches the upper limit, a flash memory array access function of the SSD is locked, and a read/write access request of a user is no longer responded to. This effectively improves data security of the SSD such that the SSD is applicable to scenarios that require high data security.

### BRIEF DESCRIPTION OF THE DRAWINGS

To more clearly describe the technical solutions in the embodiments of the present application or the prior art, the following describes the accompanying drawings required for describing the embodiments or the prior art:
FIG. 1 is a first schematic structural diagram of an SSD according to a first aspect of the embodiments of the present disclosure;
FIG. 2 is a schematic structural diagram of a limited access circuit according to a first aspect of the embodiments of the present disclosure;
FIG. 3 is a schematic structural diagram of a first logic gate circuit according to a first aspect of the embodiments of the present disclosure;
FIG. 4 is a second schematic structural diagram of an SSD according to a first aspect of the embodiments of the present disclosure;
FIG. 5 is a third schematic structural diagram of an SSD according to a first aspect of the embodiments of the present disclosure;
FIG. 6 to FIG. 10 are diagrams of a working status of a limited access circuit according to a first aspect of the embodiments of the present disclosure;
FIG. 11 is a schematic structural diagram of an electronic device according to a second aspect of the embodiments of the present disclosure; and
FIG. 12 is a flowchart of a limited access control method according to a third aspect of the embodiments of the present disclosure.

### DETAILED DESCRIPTION OF THE EMBODIMENTS

To facilitate understanding of the technical solutions provided in the embodiments of the present disclosure, the following first describes information related to a NAND flash in an SSD. A NAND flash memory chip is a main body for carrying stored data in the SSD. Data in the NAND flash is not lost after a system is powered off. The data is still there after the system is powered on again. A memory with this characteristic is called a "non-volatile memory" in the industry.

A typical NAND flash memory chip has its internal storage space organized as follows: LUN-Plane-Block-Page-Byte.

One NAND flash memory package contains one or more logical units (LUNs). One LUN contains one or more planes. One plane contains a plurality of blocks. One block contains many pages. One page contains a plurality of bytes. Several common concepts are as follows: "block", "page", and "byte".

There are three common operations for the NAND flash: reading, writing (namely, programming), and erasing. In general, reading and writing are performed on a per-page basis, whereas erasing is performed on a per-block basis. Writing and erasing are "unidirectional". Specifically, data in a memory array can only be erased to "1" (namely, all-FF data), and "1" cannot be erased to "0"; and data in a memory array can only be written as "0", and "0" cannot be written as "1".

An SSD features fast reading and writing, light weight, low energy consumption, a small size, and the like that a traditional mechanical hard drive does not have. It is widely used in many fields such as military, automotive, industrial control, video surveillance, network monitoring, network terminals, electric power, medical, aviation, and navigation devices. In recent years, SSD optimization has become a hot research topic. In common sense, an optimization direction of an SSD is to be able to support more read and write operations and have a longer data storage lifespan such that the SSD is more durable and robust.

Different from a conventional optimization direction, the inventors propose another SSD optimization idea: limiting a number of times an SSD can be accessed, allowing a host to access an internal flash memory array at most N times after the SSD is deployed, and then locking a flash memory array access function of the SSD and no longer responding to a read/write request of a user for access to the internal flash memory array. This can effectively improve data security of the SSD such that the SSD is applicable to scenarios that require high data security, such as the military equipment field.

The following describes the embodiments of the present disclosure with reference to the accompanying drawings. However, it should be understood that these descriptions are exemplary and not intended to limit the scope of the present disclosure. In addition, in the following description, descriptions of conventional structures and technologies are omitted to avoid unnecessarily confusing the concepts of the present disclosure.

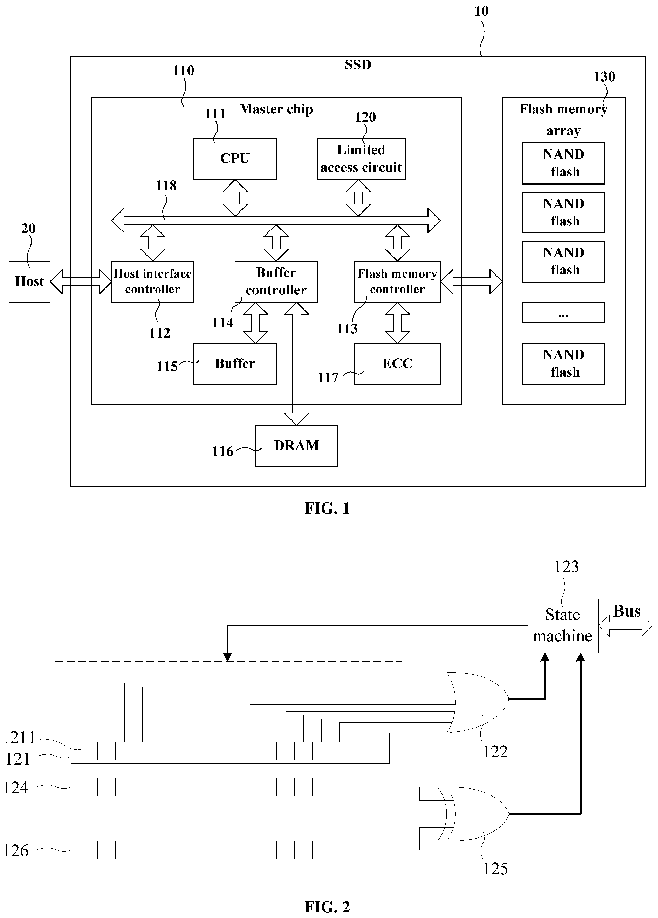

According to a first aspect, the embodiments of the present disclosure provide an SSD 10. As shown in FIG. 1, the SSD 10 includes a master chip 110, a limited access circuit 120, and a flash memory array 130, such as a NAND flash array.

Specifically, the master chip 110 may include a host interface controller 112, a CPU 111, and a flash memory controller 113. The host interface controller 112, the CPU 111, and the flash memory controller 113 are connected through a bus 118. The flash memory controller 113 is connected to the flash memory array 130. Certainly, in addition to these structures, the master chip 110 further includes other structures such as a buffer 115, a buffer controller 114, a dynamic random access memory (DRAM) 116, and an error correction code (ECC) circuit 117. For details, reference may be made to the related art. This is not described in detail in this embodiment.

As shown in FIG. 2, the limited access circuit 120 may include a limit counter 121, a first logic gate circuit 122, and a state machine 123.

The limit counter 121 includes a plurality of storage units 1211 configured to store multi-bit counting data. Its specific data bit width is determined based on an upper limit that actually needs to be configured for access to the SSD 10. Initialization data of each of the plurality of storage units 1211 is "1". For example, the limit counter 121 may be an embedded flash memory in the master chip 110, or an independent non-volatile memory chip such as an electrically erasable programmable read-only memory (EEPROM) or an SPI flash. It should be noted that when the limit counter 121 is an embedded flash memory in the master chip 110, the entire limited access circuit 120 may be integrated in the master chip 110.

A data operation terminal of the limit counter 121 is connected to the state machine 123. In other words, the state machine 123 may perform data operations, such as data erasing and data programming (namely, writing), on the limit counter 121.

The first logic gate circuit 122 is an OR operation logic circuit. The first logic gate circuit 122 includes a plurality of input terminals and one output terminal. Each data readout terminal of the limit counter 121 is connected to the corresponding input terminal of the first logic gate circuit 122. It should be noted that the limited access circuit 120 further includes a data reading circuit (not shown in the figure) configured to read data in each storage unit 1211 of the limit counter 121. For example, the data reading circuit may include a sense amplifier. For details, reference may be made to the related art. This is not described in detail in this embodiment. Each data readout terminal of the limit counter 121 is an output terminal of the data reading circuit disposed at a periphery of the limit counter 121. During specific implementation, the data stored in each storage unit 1211 is read by the data reading circuit and transmitted to the corresponding input terminal of the first logic gate circuit 122.

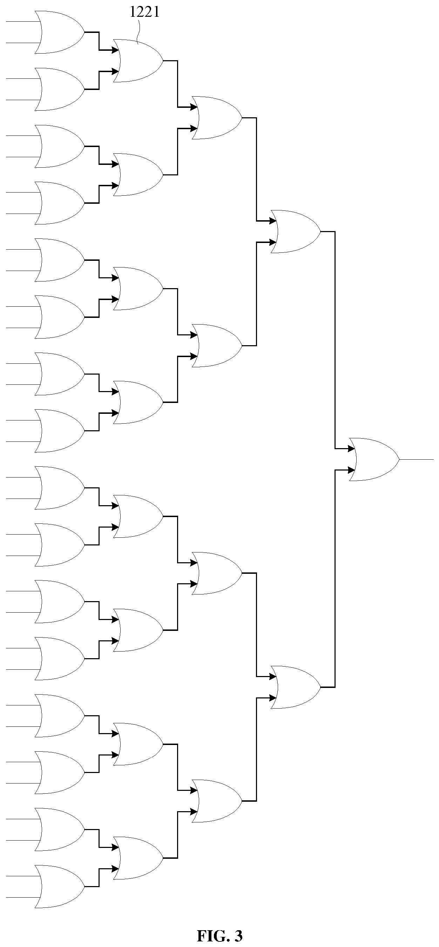

The output terminal of the first logic gate circuit 122 is also connected to the state machine 123. The first logic gate circuit 122 is configured to perform an OR operation on the multi-bit counting data read from the plurality of storage units 1211, and transmit an OR operation result to the state machine 123. A number of the input terminals of the first logic gate circuit 122 is determined by the data bit width of the limit counter 121. Specifically, as shown in FIG. 2, one multiple-input single-output OR gate may be used. Alternatively, a plurality of two-input OR gates may be cascaded. For example, as shown in FIG. 3, the data bit width of the limit counter 121 is 16, and the first logic gate circuit 122 may be a 16-input 1-output OR gate obtained by splicing a plurality of two-input OR gates 1221.

The state machine 123 may be composed of a status register and a combinational logic circuit. The state machine 123 is configured to access the limit counter 121 and write one bit of the multi-bit counting data from "1" to "0" every time it detects that a host 20 accesses the flash memory array 130 in the SSD 10, and prohibit the host 20 from accessing the flash memory array 130 again when detecting that the OR operation result output by the first logic gate circuit 122 is "0". The data bit width of the limit counter 121 determines an upper limit for a number of limited access times, and may be specifically set according to needs of an actual application scenario. For example, if the data bit width of the limit counter 121 is 16, an initial value is "1111111111111111". One of 1s is written as "0" every time it is detected that the host 20 accesses the flash memory array 130. After the host 20 accesses the flash memory array 130 for 16 times, a value of the limit counter 121 is "0000000000000000", reaching a maximum number of access times. In this case, the OR operation result output by the first logic gate circuit 122 is "0", and the host 20 is prohibited from accessing the flash memory array 130 again.

The limited access circuit 120 is connected to the master chip 110. For example, as shown in FIG. 1, the limited access circuit 120 may be connected to the bus 118 in the master chip 110. In other words, the state machine 123 is connected to the bus 118 in the master chip 110, and outputs an access prohibition command and transmits the command to the CPU 111 through the bus 118 when detecting that the OR operation result is "0". After receiving the access prohibition command, the CPU 111 no longer responds to a request of the host 20 for access to the flash memory array 130, to prohibit the host 20 from accessing the flash memory array 130 again.

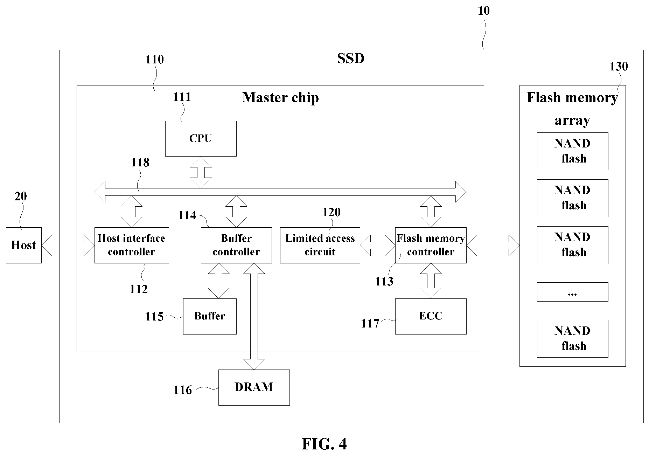

Alternatively, as shown in FIG. 4, the limited access circuit 120 may be connected to the flash memory controller 113 in the master chip 110. In other words, the state machine 123 is connected to the flash memory controller 113, and sends an access prohibition command to the flash memory controller 113 when detecting that the OR operation result is "0". After receiving the access prohibition command, the flash memory controller 113 prohibits access to the flash memory array 130, to prohibit the host 20 from accessing the flash memory array 130 again.

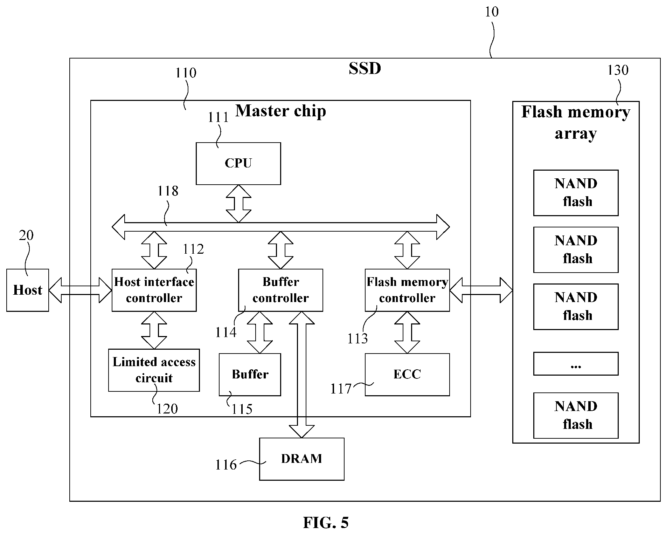

Alternatively, as shown in FIG. 5, the limited access circuit 120 may be connected to the host interface controller 112 in the master chip 110. In other words, the state machine 123 is connected to the host interface controller 112, and sends an access prohibition command to the host interface controller 112 when detecting that the OR operation result is "0". After receiving the access prohibition command, the host interface controller 112 disables an access interface to the flash memory array 130, to prohibit the host 20 from accessing the flash memory array 130 again.

In some examples, to further improve data security of the SSD 10, as shown in FIG. 2, the limited access circuit 120 may further include a second logic gate circuit 125 and a key memory 124 configured to store an externally written key. A data operation terminal of the key memory 124 is connected to the state machine 123. In other words, the state machine 123 may perform data operations, such as data erasing and data programming (writing), on the key memory 124. During specific implementation, the limit counter 121 and the key memory 124 may be different storage areas of a same non-volatile memory. For example, the same non-volatile memory is divided to obtain a limit counting area and a key area. Alternatively, the limit counter 121 and the key memory 124 may be two non-volatile memories independent of each other.

The second logic gate circuit 125 is an exclusive OR operation logic circuit and includes first input terminals, second input terminals, and an output terminal. A number of the first input terminals and a number of the second input terminals are the same as a data bit width of the key memory 124. For example, if the data bit width of the key memory 124 is 16, that is, key data is 16 bits, the second logic gate circuit 125 includes 16 first input terminals, 16 second input terminals, and one output terminal, and is configured to perform a bitwise exclusive OR operation on data input through the 16 first input terminals and the 16 second input terminals, and output an exclusive OR operation result through the output terminal.

Each of the first input terminals of the second logic gate circuit 125 is connected to a corresponding data readout terminal of the key memory 124. Similarly, each data readout terminal of the key memory 124 is an output terminal of a data reading circuit disposed at a periphery of the key memory 124. Data stored in the key memory 124 is read by the data reading circuit and transmitted to the corresponding first input terminal of the second logic gate circuit 125.

Each of the second input terminals of the second logic gate circuit 125 is connected to a supply terminal 126 of a preset security key. The preset security key (namely, a predefined pattern) is preconfigured in the SSD 10 for verifying the externally written key to improve security of the SSD 10. In some examples, to reduce a probability that the preset security key is tampered with and further improve security, each of the second input terminals may be connected to a high-level voltage terminal or a low-level voltage terminal based on the preset security key. It can be understood that the second input terminal connected to the high-level voltage terminal corresponds to preset security key data of "1", and the second input terminal connected to the low-level voltage terminal corresponds to preset security key data of "0". A 16-bit preset security key is used as an example. For example, if the preset security key is "1010101001010101", the second input terminals corresponding to bits [0], [2], [4], [6], [9], [11], [13], and [15] are connected to the high-level voltage terminal in the SSD 10, and the second input terminals corresponding to the other bits are connected to the low-level voltage terminal in the SSD 10.

Certainly, in another implementation, another independent non-volatile memory may further be disposed in the SSD 10 for configuring the preset security key of the SSD 10. In addition, the non-volatile memory is configured to be prohibited from being erased and programmed at delivery. In this case, each of the second input terminals of the second logic gate circuit 125 is connected to a corresponding data readout terminal of the non-volatile memory, and the second logic gate circuit 125 obtains the preset security key from the non-volatile memory.

The output terminal of the second logic gate circuit 125 is connected to the state machine 123. The second logic gate circuit 125 is configured to perform an exclusive OR operation on the externally written key and the preset security key, and transmit an exclusive OR operation result to the state machine 123.

The exclusive OR operation result output by the second logic gate circuit 125 is used as a security verification result to control whether to allow the host 20 to access the flash memory array 130. It is also used to control an access status of the limit counter 121 and the key memory 124. The state machine 123 is further configured to: when detecting that the exclusive OR operation result is "1", prohibit the host 20 from accessing the flash memory array 130 and allow the limit counter 121 and the key memory 124 to be erased and programmed; and when detecting that the exclusive OR operation result is "0" and the OR operation result is "1", allow the host 20 to access the flash memory array 130 and the limit counter 121 to be programmed, and prohibit the limit counter 121 from being erased and the key memory 124 from being erased and programmed.

Further, to improve reliability of a limited access function, the limited access circuit 120 may further include a voting circuit (not shown in the figure). In some examples, there are a plurality and an odd number of limit counters 121. Data readout terminals of the plurality of limit counters 121 are connected to the input terminals of the first logic gate circuit 122 through the voting circuit. Data operation terminals of the plurality of limit counters 121 are connected to the state machine 123. It should be noted that the plurality of limit counters 121 are disposed to back up counting data and improve counting reliability. The limit counters 121 have a same structure and workflow. For example, their data bit widths are the same, data erasing is synchronously performed, data writing is synchronously performed, and a same data value is written. During specific implementation, each bit of data read from the limit counters 121 is first voted through the voting circuit, and a voting result is then input to the corresponding input terminal of the first logic gate circuit 122.

Similarly, in some examples, there may also be a plurality and an odd number of key memories 124. Data readout terminals of the plurality of key memories 124 are connected to the first input terminals of the second logic gate circuit 125 through the voting circuit. Data operation terminals of the plurality of key memories 124 are connected to the state machine 123. The key memories 124 have a same structure and workflow. For example, their data bit widths are the same, data erasing is synchronously performed, data writing is synchronously performed, and a same data value is written.

For example, the voting circuit may be a triple modular redundancy, five-modular redundancy, seven-modular redundancy, or more-modular redundancy voting circuit. This is not limited in this embodiment.

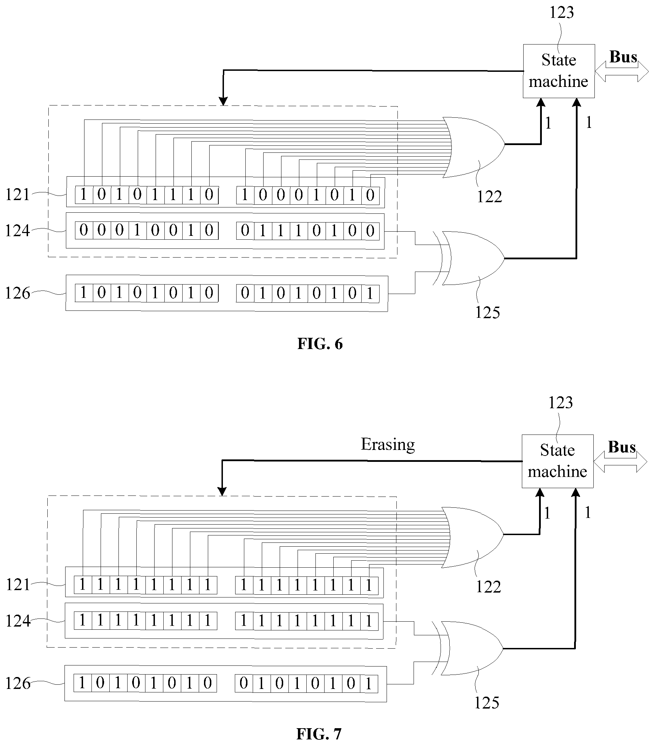

To more clearly understand the technical solutions, the following describes an example workflow of the SSD 10 with reference to FIG. 6 to FIG. 10. It should be noted that data bit widths of the limit counter 121 and the key memory 124 shown in FIG. 6 to FIG. 10 are merely an example. Specific bit widths are determined according to actual needs.

As shown in FIG. 6, random values are stored in the limit counter 121 and the key memory 124 at delivery. Therefore, when the SSD 10 is powered on for the first time after delivery, the exclusive OR operation result output by the second logic gate circuit 125 is monitored, and the OR operation result output by the first logic gate circuit 122 is ignored. Because a value (namely, the factory-set random value) in the key memory 124 is usually not equal to the preset security key, the exclusive OR operation result output by the second logic gate circuit 125 is "1". In this case, the structures are in the following working states:
(1) The limit counter 121 is allowed to be erased and programmed.
(2) The key memory 124 is allowed to be erased and programmed.
(3) The host 20 is prohibited from accessing the flash memory array 130 in the SSD 10.

Next, as shown in FIG. 7, erasing is performed on the limit counter 121 and the key memory 124 to erase data in each storage unit of the limit counter 121 and the key memory 124 to "1". For example, if the data bit width is 16, data is erased to all FF. It should be noted that the erasing may be automatically triggered upon first power-on after delivery, or may be performed when an erasing command sent by the host 20 is received. After the erasing, the value in the key memory 124 is still not equal to the preset security key. In this case, the exclusive OR operation result output by the second logic gate circuit 125 is still "1", and the structures are still in the following working states:
(1) The limit counter 121 is allowed to be erased and programmed.
(2) The key memory 124 is allowed to be erased and programmed.
(3) The host 20 is prohibited from accessing the flash memory array 130 in the SSD 10.

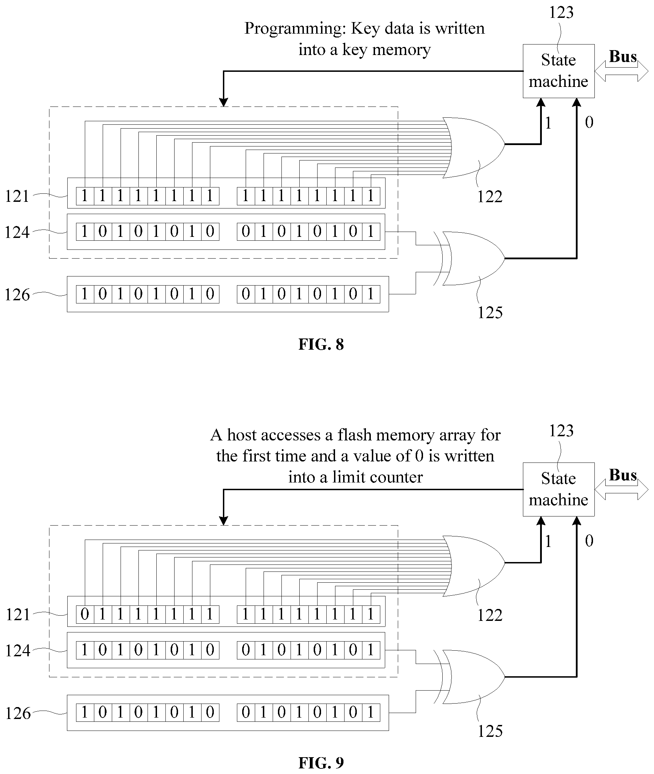

Then, a security verification prompt message may be sent to the host 20 to prompt relevant personnel to input key data of the SSD 10 on a security verification interface displayed on the host 20. After the relevant personnel input the key data on the security verification interface, a key writing command is generated. The SSD 10 receives the key writing command sent by the host 20, where the key writing command includes the key data to be written; and writes the key data into the key memory 124. As shown in FIG. 8, after the writing is completed, if the written key data is equal to the preset security key, the exclusive OR operation result output by the second logic gate circuit 125 is "0", indicating that security verification succeeds. In this case, the structures are in the following working states:
(1) The limit counter 121 is prohibited from being erased and allowed to be programmed, that is, data can only be changed from 1 to 0.
(2) The value in the key memory 124 remains unchanged, and it is prohibited from being erased/programmed.

In addition, when it is detected that the exclusive OR operation result changes from "1" to "0", the OR operation result output by the first logic gate circuit 122 starts to be monitored. In this case, each bit of data of the limit counter 121 is "1", and the OR operation result is "1". The host 20 is allowed to access the flash memory array 130 in the SSD 10. That is, the SSD 10 enters a user mode.

Thereafter, because the value in the key memory 124 remains unchanged and it is prohibited from being erased/programmed, the exclusive OR operation result output by the second logic gate circuit 125 is always "0". The limit counter 121 is also always kept prohibited from being erased and allowed to be programmed, that is, data can only be changed from 1 to 0.

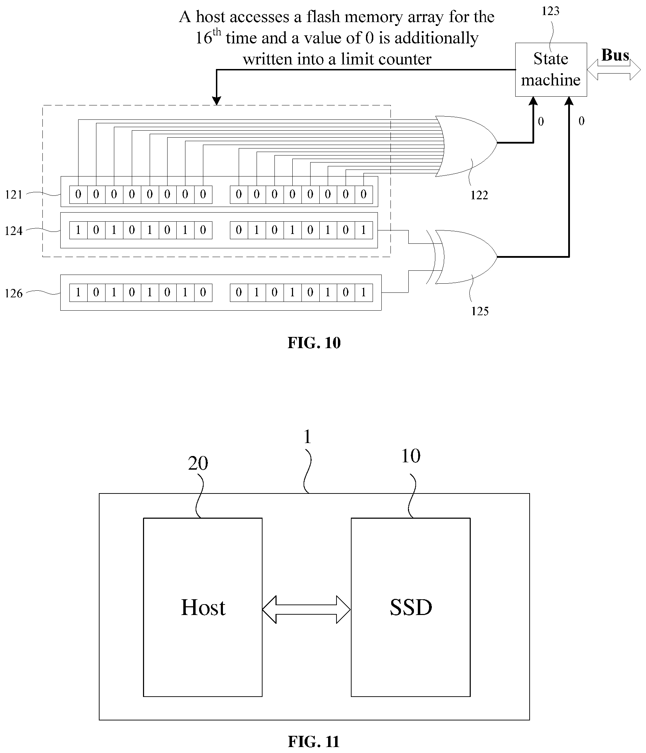

After the user mode is entered, every time it is detected that the host 20 accesses the flash memory array 130 in the SSD 10, a value of "0" is written into the limit counter 121 until each bit of data in the limit counter 121 is "0". For example, the data bit width of the limit counter 121 is 16. FIG. 9 shows a state after the host 20 accesses the flash memory array 130 in the SSD 10 for the first time and a value of "0" is written into the limit counter 121. FIG. 10 shows a state after the host 20 accesses the flash memory array 130 in the SSD 10 for the 16^{th} time and a value of "0" is additionally written into the limit counter 121. When it is detected that the OR operation result output by the first logic gate circuit 122 is "0", it indicates that a maximum number of times the flash memory array 130 in the SSD 10 can be accessed is reached. Thereafter, the host 20 is prohibited from accessing the flash memory array 130 in the SSD 10.

In addition, because access to the limit counter 121 is controlled through the exclusive OR operation result output by the second logic gate circuit 125 (that is, when the exclusive OR operation result is "0", the limit counter 121 is prohibited from being erased and allowed to be programmed, and data can only be changed from 1 to 0), each bit of data in the limit counter 121 always maintains a value of 0, and the OR operation result output by the first logic gate circuit 122 is also always "0", to permanently prohibit the host 20 from accessing the flash memory array 130 in the SSD 10.

According to a second aspect, the embodiments of the present disclosure further provide an electronic device. As shown in FIG. 11, the electronic device 1 includes a host 20 and the SSD 10 according to the first aspect. The host 20 is connected to the host interface controller 112 of the SSD 10 to access the SSD 10. For example, the electronic device 1 may be a device having a data access function, such as a personal computer, a notebook computer, a tablet computer, a mobile phone, a wearable device, or a television.

According to a third aspect, the embodiments of the present disclosure further provide a limited access control method for an SSD 10. The SSD 10 includes a master chip 110, a flash memory array 130, and a limited access circuit 120. The limited access circuit 120 includes a limit counter 121, a first logic gate circuit 122, and a state machine 123. The limit counter 121 includes a plurality of storage units 1211. Initialization data of each of the plurality of storage units 1211 is "1". A data readout terminal of the limit counter 121 is connected to an input terminal of the first logic gate circuit 122. A data operation terminal of the limit counter 121 and an output terminal of the first logic gate circuit 122 are connected to the state machine 123. For details, reference may be made to related descriptions in the first aspect above. Details are not described herein again.

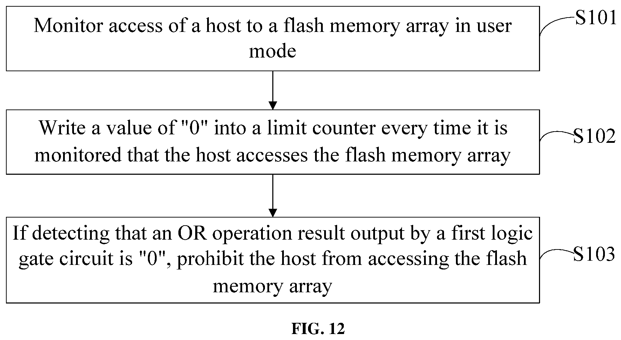

As shown in FIG. 12, the limited access control method may include at least the following steps S101 to S103.

S101: Monitor access of a host to the flash memory array in user mode.

S102: Write a value of "0" into the limit counter every time it is monitored that the host accesses the flash memory array.

S103: If detecting that an OR operation result output by the first logic gate circuit is "0", prohibit the host from accessing the flash memory array.

The user mode in S101 is a mode in which a user is allowed to access the flash memory array 130 in the SSD 10 through the host 20. It should be noted that for a specific implementation process of S101 to S103, reference may be made to related descriptions in the first aspect above. Details are not described herein again.

In some examples, before entering the user mode, the method further includes: initializing configurations, which specifically includes: performing data erasing on the limit counter 121 such that data stored in each of the plurality of storage units is initialized to "1". For a specific implementation process of performing data erasing, reference may be made to related descriptions in the first aspect above. Details are not described herein again.

It should be noted that the configurations are initialized upon first power-on after delivery of the SSD 10 and before entering the user mode. For example, the initialization may be automatically triggered when the first power-on of the SSD 10 is detected, or may be externally triggered upon the first power-on. This is not limited in this embodiment.

In some examples, the limited access circuit 120 further includes a second logic gate circuit 125 and a key memory 124 configured to store an externally written key. The second logic gate circuit 125 has a first input terminal connected to a data readout terminal of the key memory 124 and a second input terminal connected to a supply terminal of a preset security key. A data operation terminal of the key memory 124 and an output terminal of the second logic gate circuit 125 are connected to the state machine 123. For details, reference may be made to related descriptions in the first aspect above. Details are not described herein again. In this case, before entering the user mode, the method further includes: initializing configurations.

In this example, initializing the configurations may specifically include: after the SSD 10 is powered on, monitoring an exclusive OR operation result output by the second logic gate circuit 125; if the exclusive OR operation result is "1", allowing the limit counter 121 and the key memory 124 to be erased and programmed, performing data erasing on the limit counter 121 and the key memory 124 such that data stored in the limit counter 121 and the key memory 124 is initialized to "1", and writing external input key data into the key memory 124 in response to a key writing command sent by the host 20; and if the exclusive OR operation result is "0", opening an access channel of the host 20 to the flash memory array 130, entering the user mode, prohibiting the limit counter 121 from being erased and the key memory 124 from being erased and programmed, and starting to monitor the OR operation result output by the first logic gate circuit 122. For a specific implementation process, reference may be made to related descriptions in the first aspect above. Details are not described herein again.

It should be noted that the embodiments of this specification are described in a progressive manner. Each embodiment focuses on the difference from other embodiments, and the same and similar parts between the embodiments may refer to each other.

In several embodiments provided in the present application, it should be understood that the disclosed apparatus and method may be implemented in other manners. The apparatus embodiments described above are merely examples. For example, the flowchart and block diagrams in the accompanying drawings illustrate system architectures, functions, and operations that may be implemented by the apparatus, method, and computer program product according to the embodiments of the present disclosure. Each block in the flowchart or block diagrams may represent a module, a program segment, or a part of code, and the module, the program segment, or the part of code contains one or more executable instructions used to implement specified logical functions. It should also be noted that in some alternative implementations, functions marked in the blocks may also take place in an order different from the order marked in the accompanying drawings. For example, two consecutive blocks may actually be executed substantially in parallel, or sometimes may be executed in the reverse order, depending on the functions involved. It should also be noted that each block in the flowchart and/or block diagrams and combinations of the blocks in the flowchart and/or block diagrams may be implemented by a dedicated hardware-based system for executing specified functions or operations, or may be implemented by a combination of dedicated hardware and computer instructions.

**In** addition, all functional modules in the embodiments of the present disclosure may be integrated into one independent part, each of the modules may exist alone, or two or more modules may be integrated into one independent part.

When the functions are implemented in a form of a software functional module and sold or used as an independent product, the functions may be stored in a computer-readable storage medium. Based on such understanding, the technical solution of the present disclosure which is essential or a part contributing to the prior art or a part of the technical solution may be embodied in the form of a software product, the computer software product is stored in a storage medium and includes a plurality of instructions for enabling a computer device (which may be a personal computer, a server, a network device, or the like) to perform all or some steps of the method according to each embodiment of the present disclosure. The foregoing storage medium includes any medium that can store program code, such as a USB flash drive, a removable hard disk, a read-only memory (ROM), a random access memory (RAM), a magnetic disk, or an optical disc.

**In** the foregoing description of the implementations, specific features, structures, materials, or characteristics may be combined in any suitable manner in any one or more embodiments or examples.

The foregoing descriptions are merely specific implementations of the present disclosure, but are not intended to limit the protection scope of the present disclosure. Any variation or replacement readily figured out by a person skilled in the art within the technical scope of the present disclosure shall fall within the protection scope of the present disclosure. Therefore, the protection scope of the present disclosure shall be subject to the protection scope of the claims.

## Claims

1. A solid-state drive (SSD), comprising a master chip, a flash memory array, and a limited access circuit, wherein
the master chip comprises a host interface controller, a central processing unit (CPU), and a flash memory controller; the host interface controller, the CPU, and the flash memory controller are connected through a bus; and the flash memory controller is connected to the flash memory array;
the limited access circuit comprises a limit counter, a first logic gate circuit, and a state machine;
the limit counter comprises a plurality of storage units, initialization data of each of the plurality of storage units is "1", each data readout terminal of the limit counter is connected to an input terminal of the first logic gate circuit, and a data operation terminal of the limit counter and an output terminal of the first logic gate circuit are connected to the state machine;
the first logic gate circuit is configured to perform an OR operation on multi-bit counting data read from the plurality of storage units, and transmit an OR operation result to the state machine; and
the state machine is configured to write a value of "0" into the limit counter every time the state machine monitors that a host accesses the flash memory array, and prohibit the host from accessing the flash memory array when detecting that the OR operation result is "0".

2. The SSD according to claim **1,** wherein the limited access circuit further comprises a second logic gate circuit and a key memory configured to store an externally written key;
the second logic gate circuit has a first input terminal connected to a data readout terminal of the key memory and a second input terminal connected to a supply terminal of a preset security key;
a data operation terminal of the key memory and an output terminal of the second logic gate circuit are connected to the state machine;
the second logic gate circuit is configured to perform an exclusive OR operation on the externally written key and the preset security key, and transmit an exclusive OR operation result to the state machine; and
the state machine is further configured to: when detecting that the exclusive OR operation result is "1", prohibit the host from accessing the flash memory array and allow the limit counter and the key memory to be erased and programmed; and when detecting that the exclusive OR operation result is "0" and the OR operation result is "1", allow the host to access the flash memory array and the limit counter to be programmed, and prohibit the limit counter from being erased and the key memory from being erased and programmed.

3. The SSD according to claim 2, wherein a number of first input terminals and a number of second input terminals of the second logic gate circuit are the same as a data bit width of the key memory, and each of the second input terminals is connected to a high-level voltage terminal or a low-level voltage terminal based on the preset security key.

4. The SSD according to claim 1, wherein the state machine is connected to the bus.

5. The SSD according to claim **1,** wherein the state machine is connected to the flash memory controller.

6. The SSD according to claim 1, wherein the state machine is connected to the host interface controller.

7. An electronic device, comprising a host and the solid-state drive (SSD) according to any one of claims 1 to 6, wherein the host is connected to the host interface controller of the SSD to access the SSD.

8. A limited access control method for a solid-state drive (SSD), wherein the SSD comprises a master chip, a flash memory array, and a limited access circuit; the limited access circuit comprises a limit counter, a first logic gate circuit, and a state machine; the limit counter comprises a plurality of storage units, initialization data of each of the plurality of storage units is "1", a data readout terminal of the limit counter is connected to an input terminal of the first logic gate circuit, and a data operation terminal of the limit counter and an output terminal of the first logic gate circuit are connected to the state machine; and the method comprises:
monitoring access of a host to the flash memory array in user mode;
writing a value of "0" into the limit counter every time it is monitored that the host accesses the flash memory array; and
if detecting that an OR operation result output by the first logic gate circuit is "0", prohibiting the host from accessing the flash memory array.

9. The method according to claim 8, wherein before entering the user mode, the method further comprises: initializing configurations, which specifically comprises:
performing data erasing on the limit counter such that data stored in each of the plurality of storage units is initialized to "1".

10. The method according to claim 8, wherein the limited access circuit further comprises a second logic gate circuit and a key memory configured to store an externally written key; the second logic gate circuit has a first input terminal connected to a data readout terminal of the key memory and a second input terminal connected to a supply terminal of a preset security key; a data operation terminal of the key memory and an output terminal of the second logic gate circuit are connected to the state machine; and before entering the user mode, the method further comprises: initializing configurations, which specifically comprises:
after the SSD is powered on, monitoring an exclusive OR operation result output by the second logic gate circuit;
if the exclusive OR operation result is "1", allowing the limit counter and the key memory to be erased and programmed, performing data erasing on the limit counter and the key memory such that data stored in the limit counter and the key memory is initialized to "1", and writing external input key data into the key memory in response to a key writing command sent by the host; and
if the exclusive OR operation result is "0", opening an access channel of the host to the flash memory array, entering the user mode, prohibiting the limit counter from being erased and the key memory from being erased and programmed, and starting to monitor the OR operation result output by the first logic gate circuit.
